# FASCICULE DE BREVET EUROPEEN

(11) **EP 0 449 190 B1**
(45) Date de publication et mention de la délivrance du brevet: **30.08.1995**
(21) Numéro de dépôt: 91104734.8
(22) Date de dépôt: 26.03.1991
(51) Int. Cl.: G05B 19/04

(54) **Programmateur produisant des signaux de sortie binaires en réponse à un signal de rythme**
Programmschalteinrichtung zur Erzeugung von binären Ausgangssignalen als Reaktion auf ein Taktsignal
Programmer producing binary output signals in response to a clock signal

(30) Priorité: 26.03.1990 FR 9003815
(43) Date de publication de la demande: 02.10.1991
(73) Titulaire: ALCATEL MOBILE COMMUNICATION FRANCE, 75008 Paris (FR)
(72) Inventeur: Castel, Dominique, F-92110 Clichy (FR)
(74) Mandataire: Weinmiller, Jürgen

(56) Documents cités:
- EP-A- 0 001 398
- DE-A- 3 417 816
- US-A- 4 575 583

## Description

La présente invention concerne un programmateur produisant des signaux de sortie binaires en réponse à un signal de rythme.

Les programmateurs sont des appareils dont les signaux de sortie commandent le fonctionnement de divers équipements selon une séquence établie. Cette séquence est généralement enregistrée dans le programmateur lui-même et elle progresse selon un rythme défini par un signal de rythme externe.

Une première solution connue dans laquelle ce signal de rythme est un signal d'horloge consiste à utiliser pour chaque équipement à commander, un premier décompteur préchargé à une valeur de départ et un deuxième décompteur préchargé à une valeur de fin recevant chacun ce signal d'horloge. Le signal de sortie correspondant débute lors du passage à zéro du premier décompteur tandis qu'il se termine lors du passage à zéro du deuxième décompteur.

Une deuxième solution connue dans laquelle le signal de rythme est un signal numérique issu d'un compteur lui-même incrémenté par une horloge, consiste à disposer pour chaque équipement à commander un premier et un deuxième comparateurs effectuant la comparaison respectivement d'une valeur de début et d'une valeur de fin avec la valeur du signal de rythme. Le signal de sortie correspondant débute lorsque le premier comparateur détecte une identité sur ses entrées, tandis qu'il se termine lorsque le deuxième comparateur détecte également une identité.

Ces deux solutions sont bien adaptées lorsque le programmateur produit des signaux de sortie peu nombreux. Lorsque le nombre des équipements à commander devient plus important, le nombre des modules associés à chaque signal de sortie (comparateur, compteur) croît en conséquence et le programmateur nécessite une grande quantité de cellules élémentaires telles que des portes logiques pour sa réalisation. Il s'ensuit un accroissement de la surface de silicium nécessaire à son intégration, un accroissement de sa consommation énergétique et, par conséquent une augmentation de son coût.

La présente invention a ainsi pour objet un programmateur produisant des signaux de sortie en réponse à un signal de rythme qui comprend une quantité réduite de cellules élémentaires pour peu que le nombre de ces signaux de sortie dépasse quelques unités.

Le programmateur selon l'invention produisant des signaux de sortie binaires en réponse à un signal de rythme identifiant des intervalles de temps, chaque signal de sortie débutant et se terminant au cours d'intervalles de temps distincts, se caractérise en ce qu'il comprend une mémoire pourvue d'un emplacement de début affecté d'une adresse et d'un emplacement de fin affecté d'une adresse pour chaque signal de sortie, des moyens de lecture permettant de lire des valeurs numériques dans ces emplacements, des moyens de commande déterminant le fonctionnement de ces moyens de lecture à l'aide d'un générateur d'adresse de sorte que tous les emplacements soient lus durant chacun des intervalles de temps, des moyens de comparaison produisant un signal d'égalité lorsqu'un premier champ d'un emplacement a même valeur qu'un premier champ de l'intervalle de temps dans lequel a lieu la lecture, et des moyens de décodage produisant ou interrompant le signal de sortie qui correspond à l'emplacement pour lequel est produit le signal d'égalité selon que celui-ci est respectivement un emplacement de début ou un emplacement de fin.

Dans une variante de réalisation du programmateur produisant des signaux de sortie binaire en réponse à un signal de rythme, les moyens de comparaison produisent le signal d'égalité si, de plus, un deuxième champ de cet emplacement a une valeur déterminée dite valeur de périodicité.

Avantageusement, dans le programmateur produisant des signaux de sortie binaire en réponse à un signal de rythme, les moyens de décodage comprennent de plus un registre de synchronisation de sorte que tous les signaux de sortie devant changer d'état dans ledit intervalle de temps le fassent en synchronisme.

Dans une forme particulière du programmateur produisant des signaux de sortie binaire en réponse un signal de rythme, le signal de rythme provient d'un premier compteur.

De plus, dans le programmateur produisant des signaux de sortie binaire en réponse à un signal de rythme, la mémoire étant une mémoire vive, il comprend des moyens d'inscription permettant d'inscrire des valeurs numériques dans cette mémoire, et les moyens de commande produisent un signal de commande propre à commander soit les moyens d'inscription soit les moyens de lecture.

En outre, dans le programmateur produisant des signaux de sortie binaire en réponse à un signal de rythme, les moyens de commande comprennent un sélecteur d'adresse positionnant la mémoire soit à l'adresse indiquée par le générateur d'adresse soit à une adresse d'écriture selon que le signal de commande commande respectivement soit les moyens de lecture soit les moyens d'écriture.

Dans un mode de réalisation du programmateur produisant des signaux de sortie binaire en réponse à un signal de rythme, les moyens de commande recevant un signal d'horloge, le générateur d'adresses comprend un deuxième compteur recevant ce signal d'horloge et produisant comme adresse un premier champ de la valeur indiquée par ce deuxième compteur.

Par ailleurs, dans le programmateur produisant des signaux de sortie binaire en réponse à un signal de rythme, les moyens de commande déterminent la valeur du signal de commande en fonction de la valeur d'un deuxième champ du deuxième compteur.

De plus, dans le programmateur produisant des signaux de sortie binaire en réponse à un signal de rythme, la fréquence du signal d'horloge et la capacité du deuxième compteur sont prévues pour que ce deuxième compteur puisse effectuer un cycle complet durant chacun des intervalles de temps.

Selon une caractéristiques additionnelle du programmateur produisant des signaux de sortie binaire en réponse à un signal de rythme, les moyens de décodage comprennent un registre de validation délivrant un signal de sortie seulement si une information de validation qui lui est propre est présente.

Les différents objets et caractéristiques de l'invention ressortiront maintenant avec plus de détails dans le cadre de la description d'exemples de réalisation donnés à titre non limitatif en se référant aux figures annexées qui représentent :
- la figure 1, un schéma du programmateur produisant des signaux de sortie binaires en réponse à un signal de rythme selon l'invention,
- la figure 2, un schéma des moyens de commande de la mémoire de ce programmateur,
- la figure 3, un schéma des moyens de comparaison de ce programmateur,
- la figure 4, un schéma des moyens de décodage de ce programmateur.

Les éléments identiques éventuellement présents dans différentes figures seront affectés d'une seule référence.

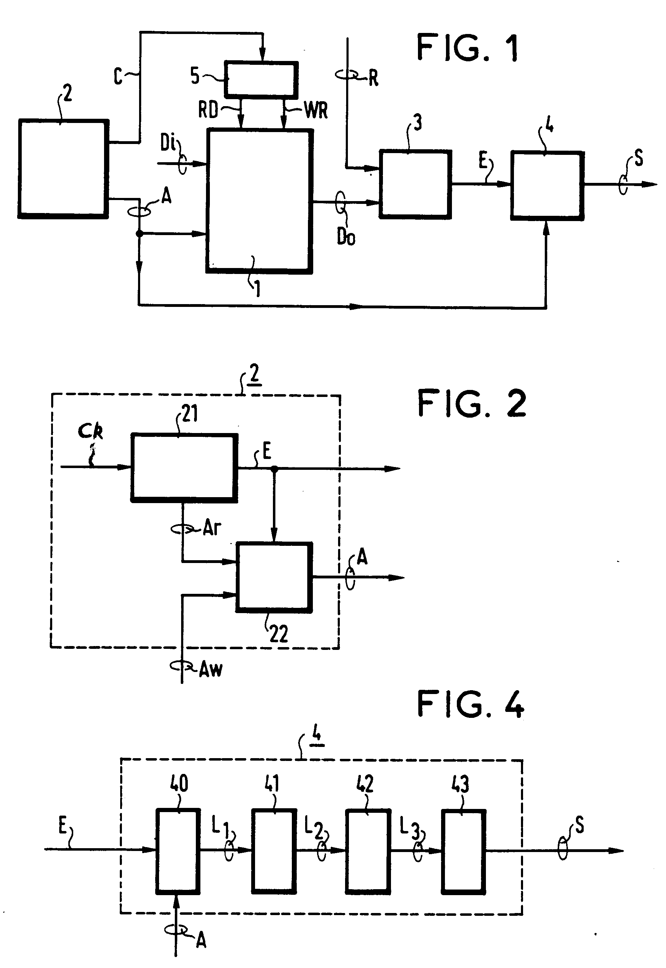

Le programmateur de l'invention, représenté dans la figure 1, est prévu pour recevoir un signal de rythme R de nature numérique qui identifie, par convention, des intervalles de temps. Il produit des signaux de sortie S à deux états.

Il comprend essentiellement une mémoire 1 où sont enregistrées les informations relatives aux différents signaux de sortie, des moyens de commande 2 de cette mémoire, des moyens de comparaison 3 permettant de détecter l'égalité entre une information de la mémoire et un intervalle de temps et des moyens de décodage 4 permettant de produire ou d'interrompre un signal de sortie S lorsque les moyens de comparaison ont identifié une information le concernant.

La mémoire 1 est de type quelconque. Ce peut être notamment une mémoire morte de type ROM ou une mémoire programmable de type PROM. Dans l'exemple de réalisation qui suit c'est une mémoire vive de type RAM. Elle est donc prévue pour recevoir un signal de lecture RD la positionnant en mode lecture et un signal d'écriture WR la positionnant en mode écriture. Ces deux signaux sont élaborés par une cellule d'analyse 5 qui reçoit un signal de commande C dont la nature sera détaillée ultérieurement.

Cette mémoire comprend des emplacements identifiés chacun par une adresse dont le nombre est fixé ici à 2ⁿ. Ceux-ci sont prévus, pour contenir des valeurs numériques composés de k bits. La mémoire est donc agencée pour recevoir un signal d'adresse A sur n fils et une donnée d'entrée Di sur k fils et pour produire une donnée de sortie Do sur k fils également.

En mode lecture, la mémoire produit comme donnée de sortie Do la valeur numérique enregistrée à l'emplacement identifié par le signal d'adresse A, tandis qu'en mode écriture, elle inscrit la donnée d'entrée Di dans cet emplacement.

Deux emplacements sont associés à chacun des signaux de sortie, le premier correspondant au début d'un tel signal et le second à sa fin. Il sera admis par la suite que tous les emplacements de la mémoire sont associés à un signal de sortie. Cette hypothèse destinée à clarifier l'exposé ne doit pas être considérée comme une restriction de l'invention qui, dans le cas contraire reste parfaitement applicable.

Le signal de rythme R identifie successivement des intervalles de temps qui sont chacun susceptibles de déclencher le changement d'état d'un des signaux de sortie s'ils ont même valeur que le contenu d'un des deux emplacements affectés à ce signal. Les moyens de commande 2 de cette mémoire représentés à la figure 2 sont prévus pour que les valeurs numériques inscrites dans tous les emplacements soient accessibles pendant chacun des intervalles de temps. Ils comprennent un générateur d'adresse 21 qui produit un signal d'adresse de lecture Ar prenant successivement toutes les valeurs comprises entre 0 et 2ⁿ-1 qui correspondent aux adresses de tous les emplacements de la mémoire. Le générateur sera, par exemple, un compteur incrémenté par un signal d'horloge Ck.

Les moyens de commande 2 sont également prévus pour permettre l'inscription de valeurs numériques dans la mémoire durant chacun des intervalles de temps. A cet effet, la capacité du compteur est supérieure au nombre d'adresses.

Elle peut être fixée, par exemple égale à 2ⁿ + 2ⁿ⁻¹, ce qui implique que le compteur ait une sortie sur n + 1 bits. Le bit de poids le plus fort, c'est-à-dire celui qui identifie les valeurs supérieures ou égales à 2ⁿ est utilisé pour produire le signal de commande C qui, lorsqu' il est à un ou à zéro définit respectivement les modes écriture ou lecture. Les moyens de commande 2 de la mémoire comprennent de plus un multiplexeur 22 qui produit le signal d'adresse A d'une valeur égale au signal d'adresse de lecture Ar ou à un signal d'adresse d'écriture Aw reçu par le programmateur selon que le signal de commande C vaut respectivement 0 ou 1.

Ainsi, lors d'un cycle complet du compteur 21, tous les emplacements de la mémoire 1 sont accédés en lecture par leur adresse qui est déterminée par un champ de ce compteur correspondant aux n bits de poids faible, puis, lorsque le bit de poids fort est à un, les données d'entrée Di sont inscrites aux emplacements identifiés par le signal d'adresse d'écriture Aw. Si le signal d'horloge Ck est périodique et a une fréquence f₁ telle que le cycle du compteur se déroule exactement pendant un intervalle de temps, les deux tiers de cet intervalle de temps seront utilés pour la lecture et le tiers restant pour l'écriture.

Les moyens de commande 2 de la mémoire 1 décrits ci-dessus sont donnés à titre d'exemple et l'invention n'exclut pas d'autres modes de réalisations. En particulier, les moyens qui permettent d'écrire durant un intervalle de temps ne sont pas strictement nécessaire au fonctionnement de l'invention, notamment si la mémoire est une mémoire morte. Il est également possible de prévoir d'autres moyens pour inscrire des valeurs numériques dans la mémoire que ce soit au cours des intervalles de temps ou dans une période ou le programmateur ne remplit pas sa fonction de commande des signaux de sorties S.

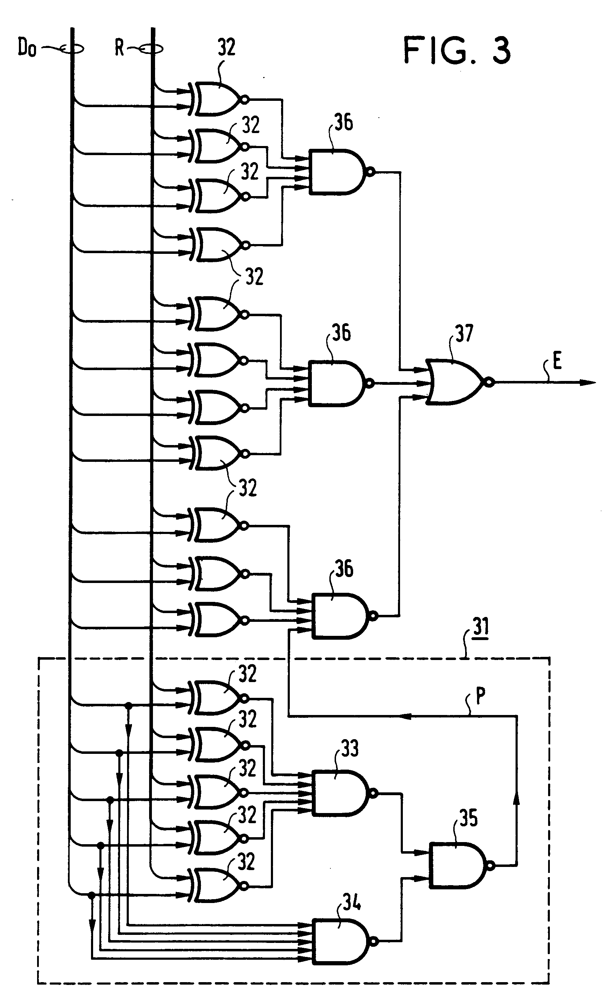

Le programmateur comprend également des moyens de comparaison 3 qui reçoivent un signal de rythme R composé de k bits et la donnée de sortie Do de la mémoire 1 composée elle aussi de k bits. Dans une première forme, ils produisent un signal d'égalité E lorsque l'intervalle de temps et la donnée de sortie sont identiques et consistent donc en un simple comparateur d'égalité. Les valeurs à comparer pouvant se subdiviser en champs, dans ce cas, les champs d'examen comprennent l'intégralité de ces valeurs. Dans une forme plus élaborée, représentée dans la figure 3 ils produisent ce signal d'égalité en cas d'identité partielle de la donnée de sortie Do et de l'intervalle de temps, c'est-à-dire pour l'identité d'un champ de ces valeurs. Dans l'exemple représenté, celles-ci comprennent 16 bits (k=16). La donnée de sortie et l'intervalle de temps comprennant chacun un premier champ formé des 11 bits de poids faible (en haut sur la figure) et un deuxième champ formé des 5 bits de poids fort (en bas sur la figure). Le signal d'égalité est produit dans ce cas, s'il y a identité des premiers champs et s'il y a présence d'un signal de périodicité P. Ce signal est élaboré par un détecteur de périodicité 31 lorsque il y a identité des deuxièmes champs ou si le deuxième champ de la donnée de sortie à une valeur particulière dite valeur de périodicité. Le détecteur de périodicité comprend cinq portes "NON OU EXCLUSIF" 32 recevant chacune un bit du deuxième champ de la donnée de sortie et de l'intervalle de temps et produisent donc un 1 en cas d'identité ; les sorties de ces cinq portes sont injectées sur les entrées d'une première porte "NON ET" 33 qui produit donc un 0 en cas d'identité des deuxièmes champs. Il comprend de plus une deuxième porte "NON ET" 34 qui produit un 0 si et seulement si les cinq bits du deuxième champ de la donnée de sortie sont à 1, c'est-à-dire si la valeur de périodicité est constituée de cinq 1. Le signal de périodicité P est issue d'une troisième porte "NON ET" 35 recevant les sorties des deux autres portes de ce type 33, 34.

La comparaison des premiers champs de la donnée de sortie, et de l'intervalle de temps se fait de manière similaire, les bits de l'un et de l'autre étant comparés un à un au moyen de portes "NON OU EXCLUSIF" 32. Trois portes "NON ET" 36 reçoivent chacune une partie des sorties des portes précédentes, une de ces portes "NON ET" recevant de plus le signal de périodicité P. Si les premiers champs sont identiques, si, de plus le signal de périodicité P est présent, et seulement dans ce cas, les sorties de ces trois portes "NON ET" 36 sont donc à 0. Une porte "NON OU" 37 produit le signal d'égalité E à partir de ces trois sorties.

Le signal de rythme sera avantageusement issu d'un compteur bien que ce ne soit pas une nécessité selon l'invention. Dans ce cas, ce compteur incrémenté par une horloge de rythme, déclenchera la production du signal d'égalité E pour chaque emplacement mémoire dont le deuxième champ est affecté de la valeur de périodicité avec une période de répétition correspondant à 2¹¹ coups de l'horloge de rythme de fréquence f₂. Une solution avantageuse consiste à fixer f₂ égale au rapport de la fréquence f₁ du compteur 21 des moyens de commande 2 à la capacité de ce même compteur.

Les moyens de comparaison 3 décrits ci-dessus et notamment les moyens de produire un signal d'égalité de manière répétitive en utilisant la valeur de périodicité sont donnés à titre d'exemple et ne doivent pas être considérés comme une restriction de l'invention.

Les moyens de décodage 4 qui constituent le dernier organe du programmateur, seront maintenant décrits en se référant à la figure 4. Ils comprennent un décodeur 40 commandé par le signal d'égalité E relié par une première liaison L₁ à un premier registre 41 comprenant un bit pour chaque emplacement de la mémoire 1, soit 2ⁿ. Le décodeur 40 positionne à 1 le bit du premier registre correspondant à l'emplacement en cours de lecture lorsque le signal d'égalité est présent.

Le premier registre 41 est relié par une deuxième liaison L₂ à un deuxième registre 42 de 2ⁿ⁻¹ bits. Chaque bit de ce registre associé à un signal de sortie est mis à un lorsque le bit du premier registre 41 correspondant à l'emplacement de début de ce signal de sortie est à un , et il est mis à zéro lorsque le bit du premier registre 41 correspondant à l'emplacement de fin de ce signal de sortie est à un. Ce deuxième registre 42 est éventuellement synchronisé sur le signal de rythme R, il sera donc dénommé registre de synchronisation.

Des moyens de remise à zéro du premier registre 41 qui ne sont pas représentés dans la figure sont prévus pour remettre à zéro tous les bits de ce registre une fois qu'ils ont été pris en compte par le deuxième registre 42. Ces moyens sont commandés périodiquement à la fréquence du signal de rythme au début ou à la fin de chaque intervalle de temps, par exemple.

Dans une variante de réalisation optionnelle un troisième registre 43 de 2ⁿ⁻¹ bits associés chacun à un signal de sortie reçoit les informations émanant du deuxième registre 42 par une troisième liaison L₃ . Un signal de sortie S est produit si les bits qui lui correspondent dans les deuxième 42 et troisième 43 registres sont à un. Ce troisième registre sera avantageusement utilisé pour valider individuellement chaque signal de sortie, il sera donc dénommé registre de validation.

A titre d'exemple, lors de la mise sous tension de mémoire 1, les valeurs numériques qu'elle contient sont indéterminées. Il est donc prudent de valider un signal de sortie uniquement lorsqu' il aura été effectivement inscrit dans cette mémoire.

Le programmateur tel qu'il a été décrit, permet à partir d'une mémoire de 2ⁿ mots de k bits de commander 2ⁿ⁻¹ signaux de sortie selon une séquence présentant 2^{k} pas. Il permet également de commander certains de ces signaux de manière périodique au cours d'une même séquence.

Dans une version légèrement différente du programmateur, l'emplacement de début et de fin d'un signal de sortie sont affectés de la même adresse. Les moyens de comparaison 3 sont aménagés pour comparer ces deux emplacements et pour produire deux signaux à destination des moyens de décodage 4 afin que ceux-ci déterminent s'il s'agit du début ou de la fin du signal de sortie identifié par cette adresse. Cette version étant aisément réalisable par l'homme de l'art ne sera pas plus détaillée.

## Revendications

1. Programmateur produisant des signaux de sortie binaires (S) en réponse à un signal de rythme (R) identifiant des intervalles de temps, chaque signal de sortie débutant et se terminant au cours d'intervalles de temps distincts, caractérisé en ce qu'il comprend une mémoire (1) pourvue d'un emplacement de début affecté d'une adresse et d'un emplacement de fin affecté d'une adresse pour chaque signal de sortie (S), des moyens de lecture permettant de lire des valeurs numériques dans ces emplacements, des moyens de commande (2, 5) déterminant le fonctionnement desdits moyens de lecture à l'aide d'un générateur d'adresse de sorte que tous les emplacements soient lus durant chacun desdits intervalles de temps, des moyens de comparaison (3) produisant un signal d'égalité (E) lorsqu'un premier champ d'un emplacement a même valeur qu'un premier champ de l'intervalle de temps dans lequel a lieu la lecture, et des moyens de décodage (4) produisant ou interrompant le signal de sortie (S ) qui correspond à l'emplacement pour lequel est produit le signal d'égalité selon que celui-ci est respectivement un emplacement de début ou un emplacement de fin.

2. Programmateur produisant des signaux de sortie binaires en réponse à un signal de rythme (R) selon la revendication 1, caractérisé en ce que lesdits les moyens de comparaison (3) produisent ledit signal d'égalité (E) si, de plus, un deuxième champ de cet emplacement a une valeur déterminée dite valeur de périodicité.

3. Programmateur produisant des signaux de sortie binaires en réponse à un signal de rythme selon la revendication 1 ou 2, caractérisé en ce que lesdits moyens de décodage (4) comprennent de plus un registre de synchronisation (42) de sorte que tous les signaux de sortie (S) devant changer d'état dans ledit intervalle de temps le fassent en synchronisme.

4. Programmateur produisant des signaux de sortie binaires en réponse à un signal de rythme (R) selon l'une quelconque des revendications précédentes, caractérisé en ce que ledit signal de rythme (R) provient d'un premier compteur.

5. Programmateur produisant des signaux de sortie binaires en réponse à un signal de rythme (R) selon l'une quelconque des revendications précédentes, caractérisé en ce que, ladite mémoire (1) étant une mémoire vive, il comprend de plus des moyens d'inscription permettant d'inscrire des valeurs numériques dans cette mémoire, et en ce que lesdits moyens de commande (2) produisent un signal de commande (C) propre à commander soit lesdits moyens d'inscription soit lesdits moyens de lecture.

6. Programmateur produisant des signaux de sortie binaires en réponse à un signal de rythme (R) selon la revendication 5, caractérisé en ce que lesdits moyens de commande comprennent de plus un sélecteur d'adresse (22) positionnant ladite mémoire soit à l'adresse (Ar) indiquée par ledit générateur d'adresse (21) soit à une adresse d'écriture (Aw) selon que ledit signal de commande (C) commande respectivement soit lesdits moyens de lecture soit lesdits moyens d'écriture.

7. Programmateur produisant des signaux de sortie binaires en réponse à un signal de rythme (R) selon la revendication 6, caractérisé en ce que, lesdits moyens de commande (2) recevant un signal d'horloge (Ck) ledit générateur d'adresses (21) comprend un deuxième compteur recevant ce signal d'horloge et produisant comme adresse (Ar) un premier champ de la valeur indiquée par ce deuxième compteur.

8. Programmateur produisant des signaux de sortie binaires en réponse à un signal de rythme (R) selon la revendication 7, caractérisé en ce que lesdits moyens de commande (2) déterminent la valeur dudit signal de commande (C) en fonction de la valeur d'un deuxième champ dudit deuxième compteur.

9. Programmateur produisant des signaux de sortie binaires en réponse à un signal de rythme (R) selon la revendication 8, caractérisé en ce que la fréquence dudit signal d'horloge (Ck) et la capacité dudit deuxième compteur (21) sont prévues pour que ce deuxième compteur puisse effectuer un cycle complet durant chacun desdits intervalles de temps.

10. Programmateur produisant des signaux de sortie binaires en réponse à un signal de rythme (R) selon l'une quelconque des revendications précédentes caractérisé en ce que lesdits moyens de décodage (4) comprennent un registre de validation (43) délivrant un dit signal de sortie seulement si une information de validation qui lui est propre est présente.

## Patentansprüche

1. Programmschaltgerät, das binäre Ausgangssignale (S) aufgrund eines Zeitintervalle identifizierenden Rhythmussignals (R) erzeugt, wobei jedes Ausgangssignal in ganz bestimmten Zeitintervallen beginnt und endet, dadurch gekennzeichnet, daß es einen Speicher (1), in dem für jedes Ausgangssignal (S) eine Anfangsspeicherstelle an einer Adresse und eine Endspeicherstelle an einer Adresse vorgesehen ist, Lesemittel, die numerische Werte an diesen Stellen lesen können, Steuermittel (2, 5), die den Betrieb der Lesemittel mit Hilfe eines Adressengenerators so bestimmen, daß alle Speicherstellen während jedes dieser Zeitintervalle gelesen werden, Vergleichsmittel (3), die ein Gleichheitssignal (E) erzeugen, wenn ein erstes Feld einer Speicherstelle den gleichen Wert wie ein erstes Feld des Zeitintervalls hat, in dem das Lesen erfolgt ist, und Dekodiermittel (4) aufweist, die das Ausgangssignal (S), das der Speicherstelle entspricht, für die das Gleichheitssignal erzeugt wurde, erzeugt oder unterbricht, je nachdem, ob es sich um eine Anfangsspeicherstelle oder eine Endspeicherstelle handelt.

2. Programmschaltgerät nach Anspruch 1, dadurch gekennzeichnet, daß die Vergleichsmittel (3) das Gleichheitssignal (E) erzeugen, wenn außerdem ein zweites Feld dieser Speicherstelle einen bestimmten Wert hat, der Periodizitätswert genannt wird.

3. Programmschaltgerät nach Anspruch 1 oder 2, dadurch gekennzeichnet, daß die Dekodiermittel (4) außerdem ein Synchronisationsregister (42) enthalten, so daß alle Ausgangssignale (S), die in dem Zeitintervall ihren Zustand ändern sollen, dies synchron tun.

4. Programmschaltgerät nach einem beliebigen der vorhergehenden Ansprüche, dadurch gekennzeichnet, daß das Rhythmussignal (R) von einem ersten Zähler kommt.

5. Programmschaltgerät nach einem beliebigen der vorhergehenden Ansprüche, dadurch gekennzeichnet, daß der Speicher (1) ein Arbeitsspeicher ist und außerdem Mittel zum Einschreiben besitzt, mit denen numerische Werte in diesen Speicher eingetragen werden können, und daß die Steuermittel (2) ein Steuersignal (C) erzeugen, das entweder die Schreibmittel oder die Lesemittel aktiviert.

6. Programmschaltgerät nach Anspruch 5, dadurch gekennzeichnet, daß die Steuermittel außerdem einen Adressenwähler (22) enthalten, der den Speicher entweder auf die Adresse (Ar) einstellt, die vom Adressengenerator (21) angegeben wird, oder auf eine Schreibadresse (Aw), je nachdem, ob das Steuersignal (C) gerade die Lese- oder die Schreibmittel aktiviert.

7. Programmschaltgerät nach Anspruch 6, dadurch gekennzeichnet, daß die Steuermittel (2) ein Taktsignal (Ck) empfangen und der Adressengenerator (21) einen zweiten Zähler enthält, der dieses Taktsignal empfängt und als Adresse (Ar) ein erstes Feld des durch den zweiten Zähler angegebenen Werts erzeugt.

8. Programmschaltgerät nach Anspruch 7, dadurch gekennzeichnet, daß die Steuermittel (2) den Wert des Steuersignals (C) abhängig vom Wert eines zweiten Felds dieses Zählers bestimmen.

9. Programmschaltgerät nach Anspruch 8, dadurch gekennzeichnet, daß die Frequenz des Taktsignals (Ck) und die Kapazität des zweiten Zählers (21) so gewählt sind, daß dieser zweite Zähler einen vollständigen Zyklus während jedes der Zeitintervalle durchführen kann.

10. Programmschaltgerät nach einem beliebigen der vorhergehenden Ansprüche, dadurch gekennzeichnet, daß die Dekodiermittel (4) ein Freigaberegister (43) enthalten, das ein Ausgangssignal nur dann liefert, wenn eine eigene Freigabeinformation vorliegt.

## Claims

1. Programmer producing binary output signals (S) in response to a timing signal (R) identifying time intervals, each output signal starting and ending during distinct time intervals, characterised in that it includes a memory (1) having a start location assigned an address and an end location assigned an address for each output signal (S), reading means for reading numerical values in these locations, control means (2, 5) for determining the operation of said reading means using an address generator so that all the locations are read during each of said time intervals, comparator means (3) producing an equality signal (E) if a first field of a location has the same value as a first field of the time interval in which reading occurs, and the decoder means (4) producing or interrupting the output signal (S) which corresponds to the location for which the equality signal is produced according to whether the latter is a start location or an end location, respectively.

2. Programmer producing binary output signals in response to a timing signal (R) in accordance with claim 1 characterised in that said comparator means (3) produce said equality signal (E) if, additionally, a second field of said location has a predetermined periodicity value.

3. Programmer producing binary output signals in response to a timing signal according to claim 1 or claim 2 characterised in that said decoder means (4) further include a synchronisation register (42) so that all the output signals (S) require to change state in, said time interval do so synchronously.

4. Programmer producing binary output signals in response to a timing signal (R) according to any one of the preceding claims characterised in that said timing signal (R) comes from a first counter.

5. Programmer producing binary output signals in response to a timing signal (R) according to any one of the preceding claims characterised in that, said memory (1) being a random access memory, it further includes writing means for writing numerical values into said memory, and in that said control means (2) produce a control signal (C) adapted to command either said writing means or said reading means.

6. Programmer producing binary output signals in response to a timing signal (R) according to claim 5 characterised in that said control means further include an address selector (22) setting said memory either to the address (Ar) indicated by said address generator (21) or to a write address (Aw) according to whether said control signal (C) respectively controls said reading means or said writing means.

7. Programmer producing binary output signals in response to a timing signal (R) according to claim 6 characterised in that, said control means (2) receiving a clock signal (Ck), said address generator (21) includes a second counter receiving said clock signal and producing as address (Ar) a first field of the value indicated by said second counter.

8. Programmer producing binary output signals in response to a timing signal (R) according to claim 7 characterised in that said control means (2) determine the value of said control signal (C) according to the value of a second field of said second counter.

9. Programmer producing binary output signals in response to a timing signal (R) according to claim 8 characterised in that the frequency of said clock signal (Ck) and the capacity of said second counter (21) are such that said second counter can complete a complete cycle during each of said time intervals.

10. Programmer producing binary output signals in response to a timing signal (R) according to any one of the preceding claims characterised in that said decoder means (4) include a validation register (43) delivering an output signal only if a validation indication specific to it is present.
